# EUROPÄISCHE PATENTANMELDUNG

(11) **EP 1 775 010 A2**
(43) Veröffentlichungstag der Anmeldung: **18.04.2007**
(21) Anmeldenummer: 06121825.1
(22) Anmeldetag: 05.10.2006
(51) Int. Cl.: B01D 46/24, F01N 3/022

(54) **Temperaturvergleichmäßigender Innenkanal für ein Filterelement und Filter zur Abgasnachbehandlung**

(30) Priorität: 14.10.2005 DE 102005049690
(71) Anmelder: ROBERT BOSCH GMBH, 70442 Stuttgart (DE)
(72) Erfinder: Reinsch, Bernd, 71642 Ludwigsburg (DE); Eisele, Ulrich, 70199 Stuttgart (DE); Herr, Ruediger, 70499 Stuttgart (DE); Komori, Teruo, 70378 Stuttgart (DE); Thuener, Lars, 70176 Stuttgart (DE); Motz, Stefan, 71696 Moeglingen (DE); Kruse, Matthias, 70499 Stuttgart (DE); Schiller, Christian, 71272 Renningen (DE); Mattern, Andreas, 76137 Karlsruhe (DE); Osemann, Christoph, 71263 Weil Der Stadt (DE)

(57) **Zusammenfassung**

Es werden ein Filterelement (14) und ein Rußfilter (1) vorgeschlagen, bei denen die Temperaturverteilung über den Querschnitt des Filterelements 14 in erster Näherung konstant gehalten werden kann.

## Beschreibung

### Stand der Technik

Die Erfindung betrifft ein Filterelement zur Reinigung der Abgase einer Brennkraftmaschine nach dem Oberbegriff der nebengeordneten Ansprüche 1 und 8 sowie einen Rußfilter. Derartige Filterelemente werden beispielsweise als Rußfilter für Dieselbrennkraftmaschinen eingesetzt.

Filterelemente können aus einem Sinterwerkstoff, insbesondere einem metallischen Sinterwerkstoff, oder einem keramischen Werkstoff bestehen. In beiden Fällen weist das Filterelement mindestens eine Filterwand aus einem offenporigen Material auf, an dessen stromaufwärts gelegener Oberfläche herausgefilterte Partikel abgeschieden werden.

Ein Filterelement aus einem Sinterwerkstoff ist aus der DE 101 28 936 A1 bekannt, wobei der Sinterwerkstoff ein poröses Filtrationsmaterial bildet. Die Filterwände sind in einer Tragstruktur aus einem festen Metall gehalten, wie beispielsweise einem Metallgewebe oder einem Streckmetall.

Bei der genannten Filterelement handelt es sich um einen Partikelfilter für ein Abgassystem einer DieselBrennkraftmaschine. Die Filterwände bei dem bekannten Filterelement sind aus Sintermetall hergestellt und so angeordnet, dass keilförmige Filtertaschen gebildet werden. Die spitzzulaufenden Keilkanten der Filtertaschen zeigen entgegen der Strömungsrichtung des Abgases, die in Strömungsrichtung gesehene hintere Schmalseite einer Filtertasche ist offen. Die Filtertaschen sind nebeneinander derart angeordnet, dass eine insgesamt rotationssymmetrische ringartige Filterstruktur gebildet wird. Im Betrieb tritt das Abgas durch die insgesamt ebenen Filterwände der Filtertaschen hindurch, wobei Partikel an der stromaufwärts gelegenen Oberfläche der jeweiligen Filterwand abgeschieden werden.

Die Filterelemente können aber auch aus einem keramischen Werkstoff bestehen und eine Vielzahl von parallel zueinander verlaufenden Eintrittskanälen und Austrittskanälen aufweisen.

Hergestellt werden Filterelemente aus keramischen Werkstoffen durch Extrudieren. Dies bedeutet, dass der Rohling des Filterelements ein prismatischer Körper mit einer Vielzahl von parallel zueinander verlaufenden Kanälen ist. Die Kanäle eines Rohlings sind zunächst an beiden Enden offen.

Damit das zu reinigende Abgas durch die Wände des keramischen Filterelements strömt, wird ein Teil der Kanäle am hinteren Ende des Filterelements verschlossen, während ein anderer Teil der Kanäle am vorderen Ende des Filterelements verschlossen wird. Dadurch werden zwei Gruppen von Kanälen gebildet, nämlich die sogenannten Eintrittskanäle, welche am hinteren Ende verschlossen sind und die sogenannten Austrittskanäle, welche am Anfang des Filterelements verschlossen sind.

Zwischen den Eintrittskanälen und den Austrittskanälen besteht nur über die porösen Wände des Filterelements eine Strömungsverbindung, so dass das Abgas das Filterelement nur durchströmen kann, indem es aus den Eintrittskanälen durch die Wände des Filterelements hindurch in die Austrittskanäle strömt.

Bei den bekannten Filterelementen lagern sich sich mit der Zeit an der stromaufwärts gelegenen Oberfläche der Filterwand Rußpartikel ab, was zu einer unerwünschten Verringerung der Durchlässigkeit der Filterwand und in der Folge zu einer Erhöhung des Druckabfalls, der beim Durchtritt des Gasstroms durch die Filterwand auftritt, führt. Entsprechend erhöht sich der sogenannte "Abgasgegendruck". Überschreitet dieser einen bestimmten Wert, wird der Filter regeneriert, indem die abgeschiedenen Rußpartikel verbrannt werden. Hierzu wird die Temperatur des Abgases, welches durch die Filterelement geleitet wird, erhöht, was wiederum durch die Einspritzung von zusätzlichem Kraftstoff bewirkt wird.

Bei Filterelementen aus keramischen Werkstoffen tritt zusätzlich noch der Effekt auf, dass es durch ungleichförmige Strömungsführung und vorhergehende, nicht vollständige Regenerationen zu einer ungleichmäßigen Rußverteilung kommt, was zu einer nicht optimalen Nutzung der Filterfläche führt. Dadurch wird der Strömungswiderstand des Filterelements erhöht und gleichzeitig die Leistungsfähigkeit des Filterelements reduziert.

Der Erfindung liegt die Aufgabe zugrunde, ein Filterelement und einen Rußfilter bereitzustellen, bei denen die Rußablagerungen, insbesondere die lokale Anhäufung von Rußablagerungen vermieden, zumindest jedoch verringert werden. Außerdem soll der Temperaturverlauf während der Regeneration vergleichmäßigt werden, so dass sowohl lokale Temperaturspitzen wie auch Bereiche mit für die Regeneration nicht ausreichender Temperatur vermieden werden.

Außerdem soll die Notwendigkeit und/oder Häufigkeit der Regeneration vermindert werden.

Diese Aufgabe wird erfindungsgemäß bei einem Filterelement, insbesondere zur Filterung von Abgasen einer Dieselbrennkraftmaschine, mit einer ringförmigen Eintrittsfläche und mit einer ringförmig Austrittsfläche und mit einem von dem Filterelement begrenzten Innenraum dadurch gelöst, dass der Innenraum gegen ungefiltertes Abgas abgedichtet ist.

Durch die erfindungsgemäße Maßnahme wird sichergestellt, dass die Temperatur im Inneren des Filterelements reduziert wird und dadurch örtliche Überhitzungen, welche die lokalen Rußanhäufungen mitverursachen, vermieden werden.

Durch das erfindungsgemäße Abdichten des Innenraums gegen ungefiltertes Abgas ist es möglich, den Innenraum als Abgasaustrittskanal für das gefilterte Abgas auszubilden, so dass, obwohl der Innenraum selbst keinen Beitrag zur Filterung des Abgases leistet, das Bauvolumen des erfindungsgemäßen Filterelements wegen der günstigen Abgasabfuhr nicht oder nur in sehr geringem Maße zunimmt.

Alternativ ist es auch möglich, im Innenraum des Filterelements einen Latentwärmespeicher anzuordnen. Dabei ist der Temperaturbereich, innerhalb dessen der Latentwärmespeicher von einer ersten Phase in eine zweite Phase oder umgekehrt wechselt, so ausgelegt, dass einerseits das Filterelement die erforderliche Betriebstemperatur erreicht, jedoch bei einer zu hohen Wärmebeaufschlagung die Temperatur des Filterelements nicht in kritische Bereiche ansteigt, sondern die zusätzliche Wärme in dem Phasenübergang zwischen den beiden Phasen des Latentwärmespeichers gespeichert wird. Dadurch ist es möglich, temporäre thermische Überlastungen des Filterelements zu vermeiden und die gespeicherte Energie zeitlich verzögert, nämlich wenn die Betriebstemperatur des Filterelements wieder unterhalb der Umwandlungstemperatur des Latentwärmespeichers liegt, in den Abgasstrom abzugeben.

Als Material für einen solchen Latentwärmespeicher kommen niedrig schmelzende Metalle in Betracht, die in fester und flüssiger Phase vorliegen können. Alternativ können auch Salze verwendet werden, beispielsweise NaCl, NaF, LiF, KF, KCl. Alle diese Stoffe müssen jedoch wegen der flüssigen Phase, in der sie vorliegen können, gekapselt sein. Dieser Nachteil würde vermieden, wenn eine Energiespeicherung mit einer Fest-Fest-Phasenumwandlung, beispielsweise von monoklinem in tetraklines Zirkonoxid, vorgesehen wird. Zwar ist eine solche Phasenumwandlung energetisch nicht so effektiv wie eine Fest-Flüssig-Phasenumwandlung, der dort erforderliche Abdichtungsaufwand kann jedoch entfallen. Darüber hinaus ist auch eine Energiespeicherung durch eine reversible Reaktion denkbar, beispielsweise eine Festphasenreaktion, die bei einem entsprechenden Temperaturniveau stattfindet.

Alternativ ist es selbstverständlich auch möglich, anstelle des Latentwärmespeichers ein Material in den Innenraum anzuordnen, welches eine hohe Wärmekapazität hat und so das Auftreten von Temperaturspitzen im Filterelement abmildert.

Schließlich ist es auch möglich, den Innenraum als Kühlluftkanal auszubilden, so dass eine aktive Kühlung der Innenbereich des Filterelements möglich ist. Es versteht sich von selbst, dass der Kühlluftkanal gasdicht gegenüber dem Abgasstrom sein muss, da sonst eine unerwünschte Vermischung von Abgas und Kühlluft auftreten könnte. Selbstverständlich können auch anstelle von Kühlluft andere Kühlmedien, wie beispielsweise gekühltes Abgas oder Kühlwasser eingesetzt werden.

Die eingangs genannte Aufgabe wird auch gelöst bei einem Filterelement, insbesondere zur Filterung von Abgasen einer Dieselbrennkraftmaschine mit einer ringförmigen Eintrittsfläche und mit einer ringförmigen Austrittsfläche, mit einem von dem Filterelement begrenzen Innenraum, dadurch, dass im Innenraum ein Filtereinsatz angeordnet ist.

Dieser Filtereinsatz kann aus einem anderen Werkstoff als das Filterelement bestehen, so dass die Auslegung und Materialwahl des Filtereinsatzes auf die im Inneren des Filterelements auftretenden hohen Betriebstemperaturen abgestimmt werden kann.

Ein weiterer Vorteil ist, dass lediglich im Inneren des Filterelements, dort wo die Temperaturbelastungen am höchsten sind, ein in hohem Maße temperaturbeständiger Filtereinsatz eingesetzt werden muss und in den äußeren Bereichen, dort wo das Filterelement angeordnet ist, ein weniger temperaturbeständiges und in der Regel auch preisgünstigeres Material eingesetzt werden kann. Durch die erfindungsgemäße Kombination eines Filterelements mit einem inmitten des Filterelements angeordneten Filtereinsatzes ist es also möglich, Art und Material des Filters in Abhängigkeit der im Betrieb entstehenden Temperaturen und Abgasbeaufschlagungen optimal auf die jeweiligen Verhältnisse anzupassen.

Die erfindungsgemäßen Filterelemente und der erfindungsgemäße Filtereinsatz können aus einem Sinterwerkstoff oder aus einem keramischen Werkstoff hergestellt werden.

Es hat sich weiter als vorteilhaft erwiesen, wenn das Filterelement rotationssymmetrisch oder zentralsymmetrisch bezüglich seiner Längsachse ist. Ovale Querschnitte sind auch möglich.

Die eingangs genannten Vorteile können auch mit einem Rußfilter mit einem Filterelement, mit einem Gehäuse, mit einer Zuleitung, mit einer Ableitung, mit einer die Zuleitung mit dem Gehäuse verbindenden Diffusor und mit einem das Gehäuse mit der Ableitung verbindenden Konus dadurch gelöst werden, dass ein erfindungsgemäßes Filterelement eingesetzt wird.

Weitere Vorteile und vorteilhafte Ausgestaltungen der Erfindung sind der nachfolgenden Zeichnung, deren Beschreibung und den Patentansprüchen entnehmbar. Alle in der Zeichnung, deren Beschreibung und den Patentansprüchen genannten Vorteile können sowohl Einzeln als auch in beliebiger Kombination miteinander erfindungswesentlich sein.

### Zeichnungen

Es zeigen:
- Figur 1: eine schematische Darstellung einer Brennkraftmaschine mit einem Filterelement;
- Figur 2: eine perspektivische Darstellung des Filterelements von Figur 1 mit mehreren Filtertaschen, die von Filterwänden begrenzt werden;
- Figur 3: einen Ausschnitt des Filterelements von Figur 2;
- Figur 4: einen Querschnitt durch ein zweites Ausführungsbeispiel eines erfindungsgemäßen Filterelements;
- Figuren 5 und 6: weitere Ausführungsbeispiele erfindungsgemäßer Filterelemente; und
- Figur 7: einen Querschnitt durch ein weiteres Ausführungsbeispiel eines erfindungsgemäßen Filterelements mit Kühlluftkanal.

### Beschreibung der Ausführungsbeispiele

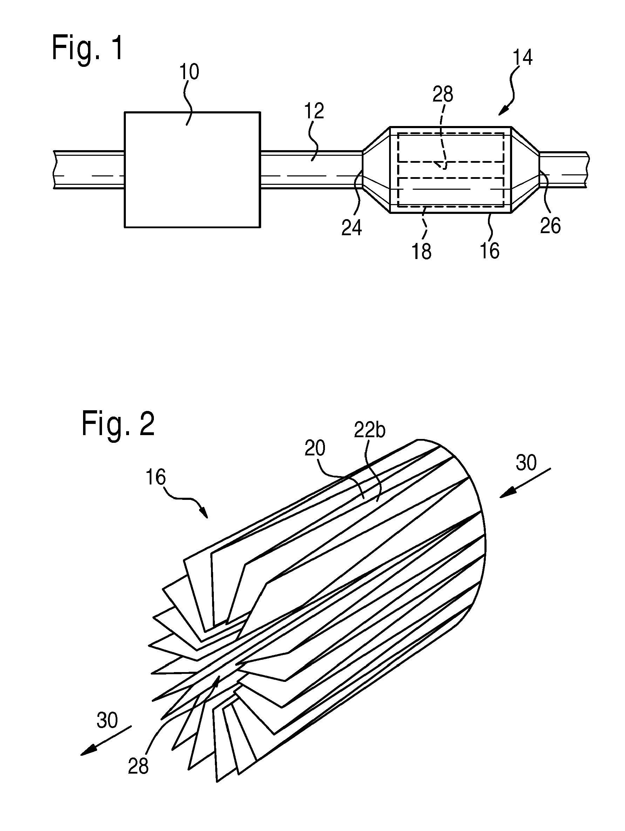

In Figur 1 trägt eine Brennkraftmaschine das Bezugszeichen 10. Die Abgase werden über ein Abgasrohr 12 abgeleitet, in dem ein Filterelement 14 angeordnet ist. Mit diesem werden Rußpartikel aus dem im Abgasrohr 12 strömenden Abgas herausgefiltert. Dies ist insbesondere bei DieselBrennkraftmaschinen erforderlich, um gesetzliche Bestimmungen einzuhalten.

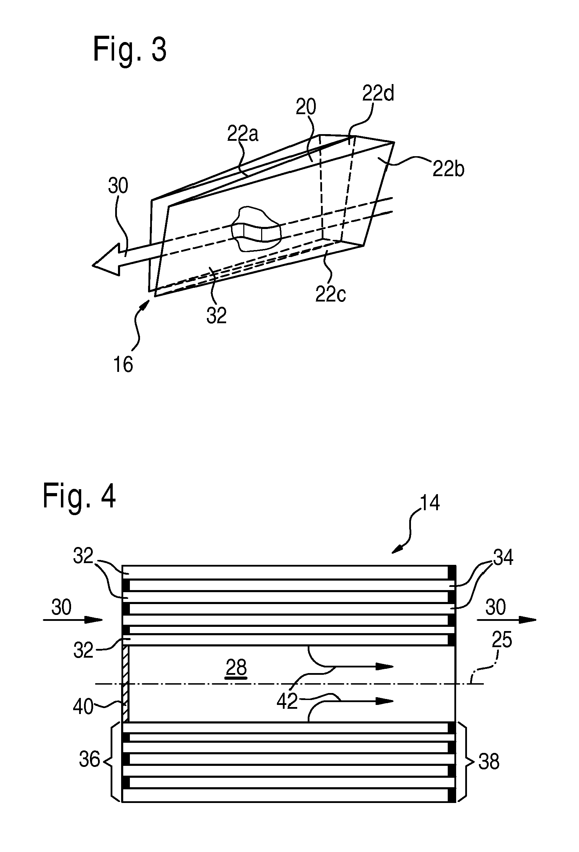

Das Filterelement 14 umfasst ein zylindrisches Gehäuse 16, in dem eine im vorliegenden Ausführungsbeispiel rotationssymmetrische, insgesamt ebenfalls zylindrische Filterstruktur 18 angeordnet ist. Diese umfasst eine Vielzahl von keilförmigen Filtertaschen, von denen in Figur 2 nur eine mit dem Bezugszeichen 20 versehen ist. Diese Filtertasche und eine benachbarte Filtertasche sind in Figur 3 nochmals vergrößert dargestellt.

Jede der keilförmigen Filtertaschen 20 weist zwei seitliche Filterwände 22a und 22b auf. Die einem Auslaß 26 des Gehäuses 16 zugewandten und in den Figuren 2 und 3 linken beziehungsweise vorderen Ränder der Filterwände 22a und 22b einer Filtertasche 20 sind miteinander verbunden, wohingegen die einem Einlass 24 des Gehäuses 18 zugewandten und in den Figuren 2 und 3 rechten beziehungsweise hinteren Ränder der Filterwände 22a und 22b einer Filtertasche 20 voneinander beabstandet sind. Hierdurch ergibt sich die Keilform der Filtertaschen 20. Nach radial innen und nach radial außen sind die Filtertaschen 20 durch insgesamt dreieckige Filterwandabschnitte 22c und 22d verschlossen. Die Strömungsrichtung des Abgases ist in Figur 3 durch einen Pfeil 30 angedeutet.

Die Filtertaschen 20 sind im vorliegenden Ausführungsbeispiel ringförmig um einen zentrischen kanalartigen Innenraum 28 angeordnet und zueinander abgedichtet. Der Innenraum 28 ist an seinem in Figur 2 hinteren und nicht sichtbaren Ende durch eine Dichtplatte verschlossen, so dass kein ungereinigtes Abgas in den Innenraum 28 gelangen kann. Durch die dreieckigen Filterwandabschnitte 22c kann gereinigtes Abgas in den Innenraum 28 gelangen.

Gegenüber dem Gehäuse 16 ist die Filterstruktur 18 ebenfalls im Bereich ihres in Figur 2 hinteren Endes durch nicht näher gezeigte Dichteinrichtungen abgedichtet.

Die die Filtertaschen 20 und letztlich die Filterstruktur 18 bildenden Filterwände 22 sind bei diesem Ausführungsbeispiel auf Sintermetallbasis hergestellt. Dabei handelt es sich um eine offenporige und gasdurchlässige Struktur, welche Rußpartikel aus dem Gasstrom herausfiltert, wenn dieser durch die Filterwände 22 hindurchtritt. Ein entsprechender Gasstrom ist auch in Figur 3 durch einen Pfeil 30 angedeutet. Der ungereinigte Abgasstrom tritt in die Filtertaschen 20 über deren in den Figuren 2 und 3 nach außen gewandte Oberfläche ein. Der gereinigte Abgasstrom verlässt die Filtertaschen 20 über deren in den Figuren 2 und 3 rechtes beziehungsweise hinteres Ende.

In Figur 4 ist ein Querschnitt durch ein zweites Ausführungsbeispiel eines erfindungsgemäßen Filterelements 14 dargestellt. Bei diesem Ausführungsbeispiel ist das Filterelement 14 als extrudierter Formkörper aus einem keramischen Material hergestellt. Parallel zu einer Längsachse 25 des Filterelements 14 verlaufen mehrere Eintrittskanäle 32 im Wechsel mit Austrittskanälen 34. Die Eintrittskanäle 32 sind an dem in Figur 4 rechten Ende, das heißt in Strömungsrichtung gesehen hinteren Ende verschlossen. Die Verschlussstopfen sind in Figur 4 ohne Bezugszeichen dargestellt. Im Gegensatz dazu sind die Auslasskanäle am hinteren Ende offen und im Bereich der Eintrittsfläche 36 verschlossen. Die kreisringförmige Eintritssfläche und die kreisringförmige Austrittsfläche sind in Figur 4 mit den Bezugszeichen 36 und 38 versehen.

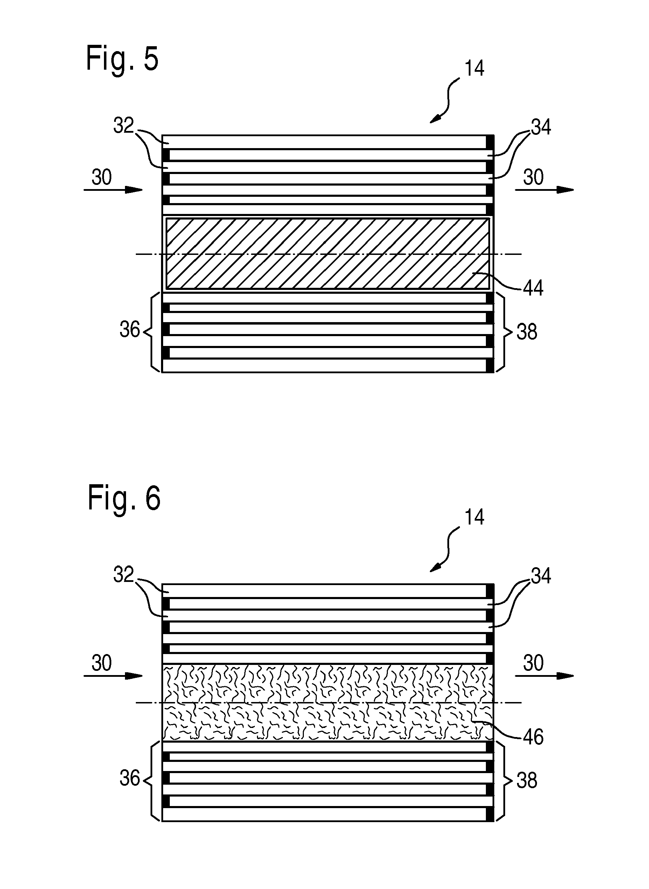

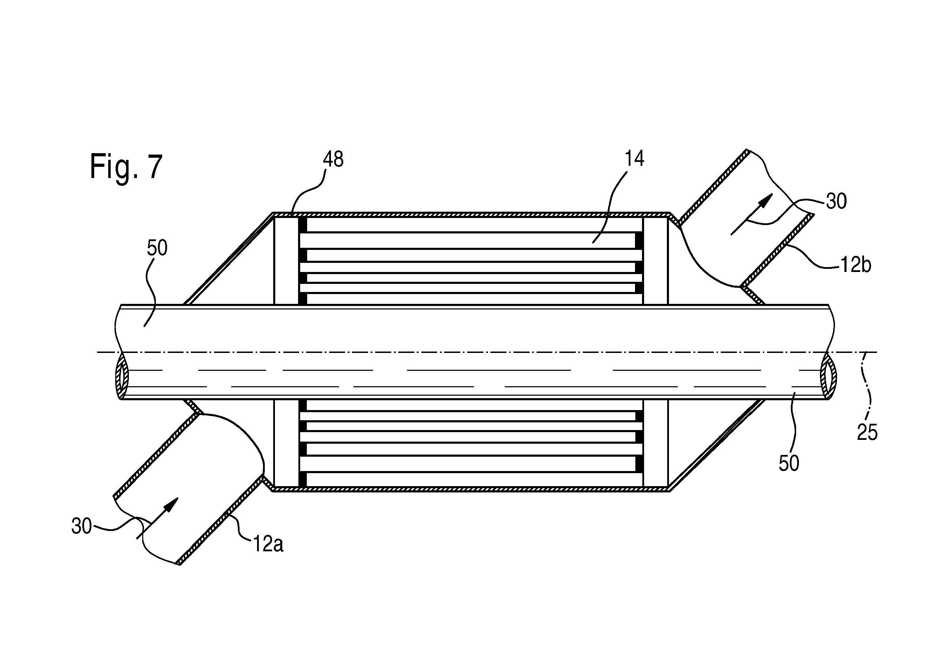

Der Innenraum 28 ist durch einen Verschluss 40 verschlossen, so dass das ungereinigte Abgas, welches in Figur 7 von links in das Filterelement 14 einströmt, nicht in den Innenraum gelangen kann. Der Strömungsweg des ungereinigten Abgases führt also in jedem Fall zunächst in einen der Eintrittskanäle 32, von dort durch eine Filterwand in einen der Austrittskanäle 34 oder in den Innenraum 28, wie dies in Figur 4 durch zwei Pfeile 42 angedeutet ist. Bei dieser Bauart eines Filterelements 14 kann dadurch, dass der Innenraum 28 nicht mit dem heißen ungereinigten Abgas beaufschlagt wird, die Temperaturbelastung in den inneren Bereichen des Filterelements 14 reduziert werden und gleichzeitig der Innenraum 28 zur Abfuhr eines Teilstroms des gereinigten Abgases genutzt werden. Selbstverständlich können diese Vorteile auch bei einem Filterelement 14 aus Sintermetall, wie es im Zusammenhang mit den Figuren 2 und 3 erläutert wurde, eingesetzt werden. Dies gilt in gleicher Weise für die Ausführungsbeispiele gemäß der Figuren 5 - 7.

Bei dem Ausführungsbeispiel gemäß Figur 5 ist der Innenraum 28 mit einem Latentwärmespeicher 44, der in Figur 5 schraffiert dargestellt ist, ausgefüllt. Dadurch ist der Innenraum 28 verschlossen, und es kann kein ungereinigtes Abgas ungefiltert durch den Innenraum und damit an dem Filterelement 14 vorbeiströmen.

Des Weiteren sorgt der Latentwärmespeicher 44 dafür, dass keine unzulässig hohen Betriebstemperaturen im Inneren des Filterelements 14 auftreten, da durch eine geeignete Wahl des Werkstoffs beziehungsweise der Materialmischung, aus welcher der Latentwärmespeicher 44 besteht, die Phasenübergänge zwischen fester und flüssiger Phase und umgekehrt in einen Temperaturbereich gelegt werden können, der etwas oberhalb der üblichen Betriebstemperatur des Filterelements 14 liegt und unterhalb einer Temperatur liegt, bei der das Filterelement 14 Schaden nehmen würde. Dadurch ist es möglich, unzulässig hohe Temperaturen im Filterelement 14 zu vermeiden, indem die überschüssige Wärmeenergie bei der teilweisen oder vollständigen Phasenumwandlung von der festen in die flüssige Phase des Latentwärmespeichers 44 gespeichert wird. Sobald die Temperaturbelastung des Filterelements 14 wieder abnimmt, kann die in dem Latentwärmespeicher 44 gespeicherte latente Wärme wieder abgegeben werden und der Latentwärmespeicher 44 geht wieder teilweise oder vollständig in die feste Phase über.

Alternativ ist es auch möglich, anstelle des Latentwärmespeichers 44 ein temperaturbeständiges Material mit einer hohen spezifischen Wärmekapazität in den Innenraum 28 einzusetzen, so dass die Temperaturspitzen aufgrund der hohen spezifischen Wärmekapazität des Materials im Innenraum des Filterelements 14 abgemildert werden.

Alternativ ist es auch möglich, in den Innenraum 28 des Filterelements 14 einen Filtereinsatz 46 einzusetzen. Dieser Filtereinsatz 46 kann von dem zuströmenden Abgas durchströmt werden.

Bei dem in Figur 6 dargestellten Ausführungsbeispiel besteht der Filtereinsatz 46 aus einem faserförmigen Filtermaterial. Durch die Verwendung eines Filtereinsatzes 46 im Zentrum in der Mitte des Filterelements 14 ist es möglich, den unterschiedlichen Betriebsbedingungen im Zentrum und an der Peripherie des Filterelements Rechnung zu tragen.

So wird beispielsweise das Zentrum des Filterelements 14, dort wo der Filtereinsatz 46 vorgesehen ist, direkt mit dem Abgas aus dem Abgasrohr 12 beaufschlagt, so dass der Staudruck an der Eintrittsfläche des Filtereinsatzes 46 höher ist als an der Eintrittsfläche des Filterelements 14. Diesem Effekt kann beispielsweise durch einen gegenüber dem Filterelement 14 erhöhten Strömungwiderstand des Filtereinsatzes 46 Rechnung getragen werden. Außerdem ist die Temperaturbelastung des Filtereinsatzes 46 naturgemäß höher, da der Filtereinsatz 46 von dem Filterelement 14 umgeben wird, das selbst eine hohe Betriebstemperatur hat. Diesen Effekten kann durch die Wahl eines besonders temperaturfesten Materials für den Filtereinsatz 46 Rechnung getragen werden. Bei dem Filterelement 14, das naturgemäß eine etwas geringe Betriebtemperatur hat, können kostengünstigere Werkstoffe eingesetzt werden und es kann beispielsweise der Strömungswiderstands optimiert werden.

Durch den in Figur 6 dargestellten Hybridfilter bestehend aus einem Filterelement 14 und einem Filtereinsatz 46 kann eine verbesserte Anpassung an die lokal herrschenden Strömungs- und Temperaturverhältnisse vorgenommen werden.

In Figur 7 ist ein erfindungsgemäßes Filterelement 14 in ein Gehäuse 48 integriert. In der Mitte des Filterelements 14 ist ein Rohr 50 vorgesehen, durch das Kühlluft oder ein anderes Kühlmedium (nicht dargestellt) strömen kann.

Bei diesem Ausführungsbeispiel mündet das Abgasrohr 12a in den in Figur 7 linken Kegelstumpf des Gehäuses 48. Über das Abgasrohr 12b wird das gereinigte Abgas aus dem Gehäuse 48 abgeführt. Koaxial zu der Längsachse 25 des Filterelements 14 ist ein Rohr 50 durch das Gehäuse 48 und das Filterelement 14 hindurchgeführt, wobei das Rohr 50 gasdicht ist, so dass aus dem Gehäuse 48 kein Abgas in das Rohr 50 gelangen kann. Wenn nun das Rohr 50 von Kühlluft durchströmt wird, ist es möglich, das Innere des Filterelements 14 aktiv zu kühlen, um so die Temperaturbedingungen im Inneren und am äußeren Rand des Filterelements 14 aneinander anzugleichen. Selbstverständlich können auch andere Kühlmedien, wie beispielsweise abgekühltes Abgas und anderes mehr in dem Rohr 50 zur Kühlung des Filterelements 14 vorgesehen werden. Auch ist es möglich, das Rohr 50 temperaturgesteuert zu öffnen oder zu schließen, so dass damit eine Temperaturregelung des Filterelements 14 möglich ist.

## Patentansprüche

1. Filterelement, insbesondere zur Filterung von Abgasen einer Dieselbrennkraftmaschine mit einer ringförmigen Eintrittsfläche (36) und mit einer ringförmigen Austrittsfläche (38), und mit einem von dem Filterelement (14) begrenzten Innenraum (28), **dadurch gekennzeichnet, dass** der Innenraum (28) gegen ungefiltertes Abgas abgedichtet ist.

2. Filterelement nach Anspruch 1, **dadurch gekennzeichnet, dass** der Innenraum (28) als Austrittskanal für gefiltertes Abgas ausgebildet ist.

3. Filterelement nach Anspruch 1, **dadurch gekennzeichnet, dass** im Innenraum (28) ein Latentwärmespeicher (44) angeordnet ist.

4. Filterelement nach Anspruch 3, **dadurch gekennzeichnet, dass** der Latentwärmespeicher (44) in einem Temperaturbereich von 800°C bis 1200°C, insbesondere von 900°C bis 1100°C, teilweise oder vollständig von der einer ersten, vorzugsweise festen Phase in eine zweite, vorzugsweise flüssige Phase übergeht.

5. Filterelement nach Anspruch 4, **dadurch gekennzeichnet, dass** der Phasenübergang des Latentwärmespeichers (44) reversibel ist.

6. Filterelement nach Anspruch 1, **dadurch gekennzeichnet, dass** der Innenraum (28) als Kühlluftkanal (50) ausgebildet ist.

7. Filterelement, insbesondere zur Filterung von Abgasen einer Dieselbrennkraftmaschine, mit einer ringförmigen Eintrittsfläche (36) und mit einer ringförmigen Austrittsfläche (38), mit einem von dem Filterelement (14) begrenzten Innenraum (28), **dadurch gekennzeichnet, dass** im Innenraum (28) ein Filtereinsatz (46) angeordnet ist.

8. Filterelement nach Anspruch 7, **dadurch gekennzeichnet, dass** der Filtereinsatz (46) aus einem faserförmigen Filtermaterial, insbesondere aus Al₂O₀, TᵢO2, Silicate oder deren Mischungen und/oder Metall, besteht.

9. Filterelement nach einem der vorhergehenden Ansprüche, **dadurch gekennzeichnet, dass** das Filterelement (14) aus einem Sinterwerkstoff, insbesondere Sintermetall, oder einem keramischen Werkstoff besteht.

10. Filtereinsatz () nach einem der Ansprüche 7 oder 8, **dadurch gekennzeichnet, dass** der Filtereinsatz (46) aus einem Sinterwerkstoff, insbesondere Sintermetall, oder einem keramischen Werkstoff besteht.

11. Filterelement nach einem der vorhergehenden Ansprüche, **dadurch gekennzeichnet, dass** die Eintrittsfläche (36) und/oder die Austrittsfläche (38) des Filterelements (14) an ihrem äußeren Rand kreisförmig oder oval ist.

12. Filterelement nach einem der Ansprüche 1 bis 10, **dadurch gekennzeichnet, dass** die Eintrittsfläche (36) und/oder die Austrittsfläche (38) des Filterelements (14) an ihrem äußeren Rand quadratisch oder rechteckig ist oder die Form eines gleichseitigen Polyeders hat.

13. Filterelement nach einem der vorhergehenden Ansprüche, **dadurch gekennzeichnet, dass** die Eintrittsfläche (36) und/oder die Austrittsfläche (38) des Filterelements (14) an ihrem inneren Rand kreisförmig oder oval ist.

14. Filterelement nach einem der Ansprüche 1 bis 12, **dadurch gekennzeichnet, dass** die Eintrittsfläche (36) und/oder die Austrittsfläche (38) des Filterelements (14) an ihrem inneren Rand quadratisch oder rechteckig ist oder die Form eines gleichseitigen Polyeders hat.

15. Filterelement nach einem der vorhergehenden Ansprüche, **dadurch gekennzeichnet, dass** das Filterelement (14) prismatisch ist

16. Filterelement nach einem der vorhergehenden Ansprüche, **dadurch gekennzeichnet, dass** das Filterelement (14) rotationssymmetrisch oder zentralsymmetrisch bezüglich seiner Längsachse (25) ist.

17. Rußfilter mit einem Filterelement (14), mit einem Gehäuse (16) und mit einem Abgasrohr (12, 12a, 12b), **dadurch gekennzeichnet, dass** das Filterelement ein Filterelement (14) nach einem der vorhergehenden Ansprüche ist.
